# EUROPEAN PATENT APPLICATION

(11) **EP 1 515 175 A1**
(43) Date of publication of application: **16.03.2005**
(21) Application number: 03725710.2
(22) Date of filing: 30.04.2003
(51) Int. Cl.: G02B 27/00

(54) **LIGHT STIRRER**

(30) Priority: 18.06.2002 JP 2002176726
(71) Applicant: JAPAN SCIENCE AND TECHNOLOGY CORPORATION, Kawaguchi-shi, Saitama 332-0012 (JP)
(72) Inventor: KINOSHITA, Kazuhiko, Okazaki-shi, Aichi-ken 444-0802 (JP); SHIO, Megumi, Kamakura-shi, Kanagawa-ken 248-0032 (JP)
(74) Representative: Jackson, Robert Patrick
(86) International application number: PCT/JP2003/005521
(87) International publication number: WO 2003/107071

(57) **Abstract**

This invention provides an optical mixer to convert coherent light into virtually incoherent light by using a hollow motor to rotate the optical mixing plate at the peripheral speed of at least 1800 times per minute relative to the laser beam diameter. This invention comprises an optical mixing plate 8 installed on the light path and a hollow motor 2 to rotate said optical mixing plate 8 at high speed, and is capable of converting the laser beams incident on said optical mixing plate 8 into virtually incoherent light.

## Description

### Technical Field

This invention relates to an optical mixer in which a hollow motor is used to rotate an optical mixing plate at a peripheral speed of at least 1800 times per minute relative to the laser beam diameter to convert coherent light into virtually incoherent light.

### Background of the Invention

A method to simply pass a laser beam through a rotating diffusion plate is conventionally used in laboratories to solve problems caused by coherence that are unique to the laser beam. This method, however, is unable to remove speckle patterns from the excellent coherence unique to the laser beam. The laser beam is merely homogenized.

In 1977 Hard et al made a laser beam pass a round optical glass-made wedge that was rotating at 2500 rpm and the variations in wedge thickness were immediately reflected on the length of the light path. Their method solved many problems associated with coherence unique to the laser beam and served to improve differential interference contrast images.

Presently, an optical fiber lightguide is set between the laser beam and microscope, and the length of the light path is modified by vibrating the lightguide using a piezoelectric element or speaker-vibrated membrane. When a lightguide (optical fibers) is vibrated, the laser beam becomes incoherent in terms of time at a frequencies lower than the vibration frequency.

However, the above system that vibrates a lightguide set between laser beam and microscope to change the length of the light path is not an optical component easily built into optical systems. A unit incorporating such a system is not compact and the cost is rather high.

When a laser beam is used in illumination systems, the coherence of the laser beam has the effect of generating a complex diffraction pattern due to interference of the reflected light from all surfaces, dirty optical elements, and scattered light from damaged optical parts.

Even fluorescence of a different wavelength from excitation light used for illumination (assumed to be an incoherent light) like one on a fluorescence microscope is not immune from this influence. Strong interference fringes caused by excitation light for illumination give rise to striped patterns even in the fluorescent images. This problem is experienced in a wide range of microscopic observations. The coherence of laser beams, in particular, is very strong and the coherence-related problems have basically remained unsolved. This is the reason why laser beams are not used much as bright light sources of excellent monochromaticity at present.

This invention intends to solve these conventional problems by providing an optical mixer that converts the coherence of the laser beams into virtual incoherence by rapidly changing the length of the light path and using the light mixing effect.

The light mixer of this invention can be used as an additional optical component in any optical system to realize a compact and inexpensive equipment.

### Disclosure of the Invention

The technical means adopted by this invention to solve the above problems is:
An optical mixer comprising an optical mixing plate installed on the light path and a hollow motor rotating said optical mixing plate at a peripheral speed of at least 1800 times per minute relative to the laser beam diameter, in which laser beams are input through said optical mixing plate to be converted into virtual incoherent light;
The above-stated optical mixer in which said hollow motor is an air motor;
The above-stated optical mixer in which said hollow motor is an electric motor;

The above-stated optical mixer in which said optical mixing plate includes both nonperiodic random structures such as a lemon skin filter and beam- forming diffuser and periodic structures such as a holographic plate (diffraction pattern generator), fly's-eye lens, and micro-lens array;

The above-stated optical mixer in which annulus illumination is achieved by installing a tilted flat parallel glass disc or wedge disc glass on the center shaft of said hollow motor with the unnecessary interference fringes removed by high-speed rotation.

The above-stated optical mixer in which said optical mixing plate is constructed as thin as possible and is installed as close as possible to the end face on the laser emitting side;

The above-stated optical mixer in which the rotor (rotating section) of said hollow motor is designed and constructed symmetrically in terms of both weight and shape; and

The above-stated optical mixer in which said hollow motor rotating at high speed is supported within the housing via cushions.

### Brief Description of the Drawings

Figure 1: Front view of the first embodiment of this invention.
Figure 2: Enlarged sectional view of section A-A in Figure 1.
Figure 3: Sectional view of section B-B in Figure 2.
Figure 4: Sectional and side views of this embodiment using a flat coreless electric motor.
Figure 5: Sectional view of an example in which the hollow motor is supported by O-rings.
Figure 6: An example of conventional applications in which laser beams enter an optical mixing plate which is parallel to the beams and no condenser lens is used after said plate.
Figure 7: An example of applications in which a collimated laser beams enters an optical mixing plate and the secondary light source image created by a periodic structure in the plate is collimated into parallel light flux by means of a condenser lens.
Figure 9: An application of the optical mixing plate of this invention in which a tilted flat parallel plate is used in place of the optical mixing plate.
Figure 10: Another application of the optical mixing plate of this invention in which a deflection prism is used in place of the optical mixing plate.

### Best Embodiments of this Invention

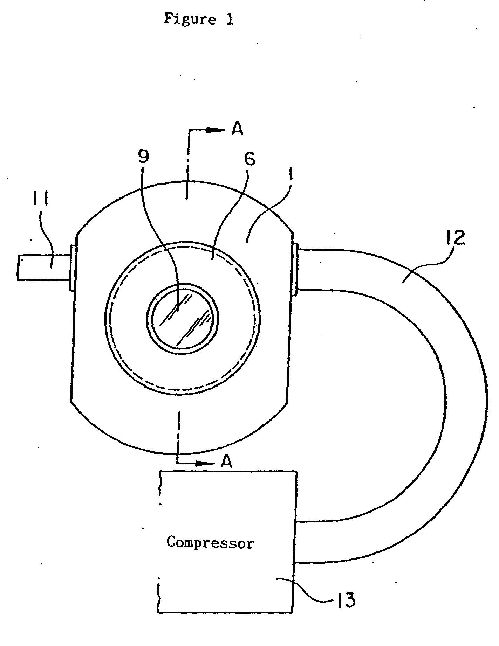

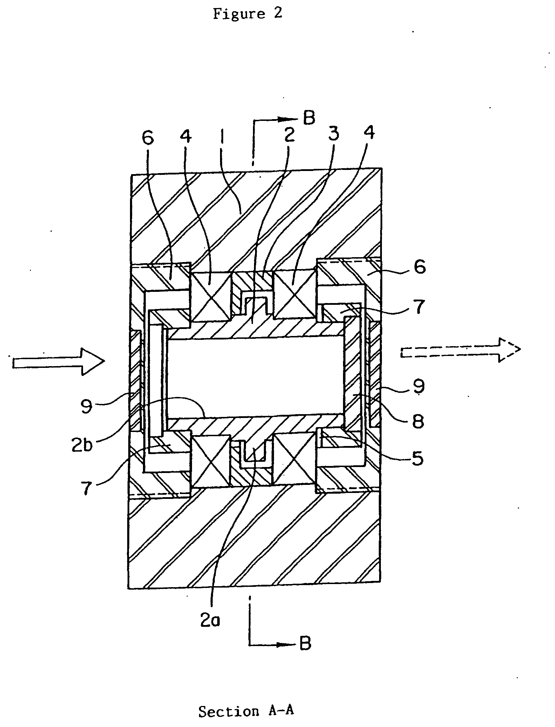

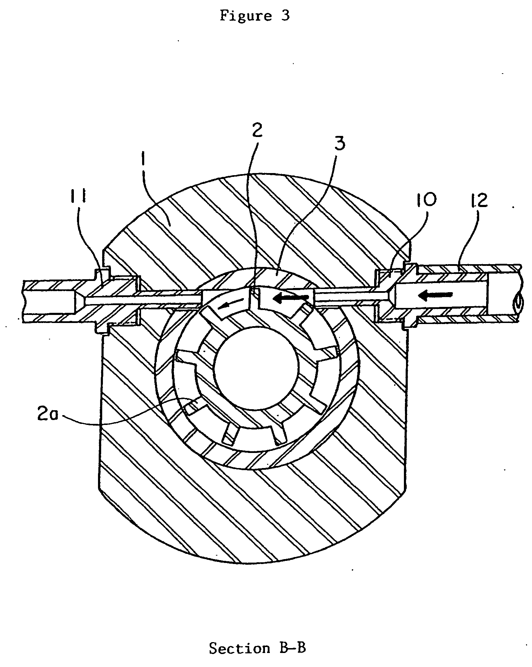

The embodiments of this invention are described below. Figure 1 is the front view of the first embodiment of this invention. Figure 2 is an enlarged sectional view of section A-A in Figure 1. Figure 3 is the sectional view of section B-B in Figure 2. An air motor is used to drive the hollow motor in this embodiment.

In these drawings, the parts are denoted as follows: 1 body, 2 rotating center shaft with vanes, 3 intermediate tube, 4 angular bearing, 5 spring washer, 6 circular glass retaining fixture, 7 stepped fixation ring, 8 optical mixing plate, 9 window glass, 10 air jet port, 11 air discharge port, 12 tube, and 13 air compressor.

The body 1 has a cylindrical through-hole at the center as shown in Figure 2. In this through-hole, the rotating center shaft equipped with vanes 2 is held in place by angular bearings 4 and 4, circular glass retaining fixture 6, and stepped fixation rings 7 and 7 so that the rotating center shaft can rotate freely. The inner rings of the angular bearings 4 holding the rotating center shaft 2 in place are fixed directly or by the stepped fixation ring 7 via spring washer 5. The side of the outer ring of the angular bearing 4 is fixed by the circular glass retaining fixture 6. Spring washer 5 is used on the right side only in Figure 2. It is possible to use this washer on the left side or on both sides.

The rotating center shaft equipped with vanes 2 is provided with a through hole 2b at the center to allow the laser beams to pass through it. Multiple vanes 2a are formed on the periphery of the center shaft at equal distances as shown in Figure 3. The rotating center shaft 2 rotates when high pressure air strikes the vanes 2a. Said vanes are located between angular bearings 4 and 4 as shown in Figure 2. The intermediate tube 3 is placed around the vanes. High pressure air is jetted from air jet port 10 (to be described later) at vanes 2a to rotate the rotating center shaft 2. The body 1 is provided with an air jet port 10 and an air discharge port 11, which are connected to each other to form a flow path. Said vanes 2a are located in said flow path. The air jet port 10 is connected to an air compressor via tube 12.

The relationships of vanes 2a, intermediate tube 3, and angular bearings 4 are not necessarily limited to those shown in the figures. Various other means may be used provided that high pressure air strikes the vanes 2a on the rotating center shaft 2 to rotate it at high speed.

In Figure 2, stepped fixation ring 7 with a through hole at the center is mounted on the laser beam exit side of the rotating center shaft equipped with vanes 2 via the spring washer 5. The optical mixing plate 8 is fitted into the through hole of the stepped fixation ring 7 using an appropriate means (adhesive, screws, etc.) so that the optical mixing plate 8 rotates at high speed together with the rotating center shaft equipped with vanes 2.

A circular glass retaining fixture 6 is mounted on either end and outside of the rotating center shaft equipped with vanes 2. A window glass 9 is fastened to each of said circular glass retaining fixtures 6 using an appropriate means.

With the optical mixer constructed as above, laser beams enter the window glass 9 on the left side as shown in Figure 2, pass through the hole 2b of the rotating center shaft 2 and optical mixing plate 8, and exit from the window glass 9 on the right side. Said optical mixing plate should preferably be located as close as possible to the end face of the body on the laser beam exit side. The optical mixer should also be constructed as thin as possible.

The optical mixer constructed as above is described below. A lemon skin filter (diffuser) is used as the optical mixing plate.

A typical lemon skin filter is an assembly of convex lenses with random, different and small focal distances. To reduce cost in practical applications, plate glasses are frosted by rough grinding and chemically etched to reduce scattering. This treatment gives the surface the appearance of lemon skin. The product is therefore not an assembly of convex lenses with uniform small focal distances (a micro-lens array) but a random, nonperiodic structure consisting of convex and concave lenses of random focal distances.

The rotating center shaft equipped with vanes 2 of the hollow motor rotates at high speed (e.g. at a peripheral speed of at least 1800 times per minute relative to the laser beam diameter) when struck by high-pressure air from the air compressor jetted from the air jet port 10. The laser beams enter the window glass 9 on the left side as shown in Figure 2, pass through the hole 2b of the rotating center shaft with vanes 2 and optical mixing plate 8, and exit from the window glass 9 on the right side.

At that time, in Figure 2, the laser beams are scattered on the lemon skin filter which retains the effects of its assembly of convex and concave lenses with random, different and small focal distances. When the filter rotates, the scattered laser beams are mixed and the length of the light path changes quickly. As a result, the incident laser beams are virtually incoherent in terms of time average.

The center shaft of the hollow motor can rotate at a speed of more than 10,000 rpm. When a laser beam 1 mm in diameter is emitted to an area 3.2 mm in radius around the center of the optical mixing plate, radiations of different states (different wave trains) are emitted 200,000 times per minute. Incoherence of the laser beam is virtually guaranteed, assuming time average, at frequencies lower than at least 3.3 kHz.

Experiments have shown that, in this state, speckle patterns can be completely removed from ordinary detectors. Incoherence of the laser beam is virtually achieved, assuming time average, at frequencies lower than at least 30 kHz if a larger size of hollow motor is used; the area is 10 mm in radius around the center of the optical mixing plate; and the laser beam diameter is tightened to 0.3 mm. Interference fringes are not recorded on ordinary video cameras if the optical mixing plate rotates at or above the peripheral speed of 1800 times per minute (30 Hz in this case) relative to the laser beam diameter. It is safe, however, to select a speed of at least several times the above value.

The above optical mixing plate may be, in place of a lemon skin filter, a frosted glass obtained immediately before optical polishing called a diffusion plate or a beam-forming diffuser from Physical Optics Corporation. (This beam-forming diffuser has a surface relief hologram and has the same effects as an array of micro-concave lenses.) Other holographic plates available include a diffractive optical element marketed by Edmund Optics Japan as a diffraction pattern generator product. The coherence unique to the laser beam can also be made incoherent in terms average, by the use of time of periodical structures such as fly's-eye lenses and micro-lens arrays depending on the way such components are used.

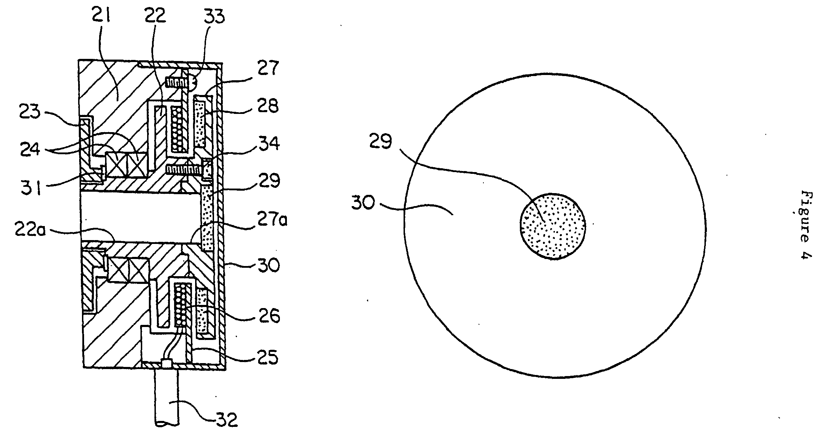

The second embodiment of this invention is described below. This example features a flat coreless electric motor as the hollow motor to rotate the optical mixing plate. Figure 4 shows a sectional view and a side view of the second embodiment of this invention using a flat coreless electric motor.

In the figure the parts are denoted as follows: 21 outer tube, 22 rotating center shaft with yoke, 23 fixation ring with lid, 24 angular bearing, 25 coil support plate, 26 coil, 27 yoke, 28 magnet, 29 optical mixing plate, 30 case, 31 spring washer, 32 cable, 33 machine screw, and 34 pan head screw.

The outer rings of the two angular bearings 24 are press-fitted into outer tube 21 by double combination. The rotating center shaft with yoke 22 is fitted into the inner rings of angular bearings 24 and fastened by the fixation ring with lid 23 via spring washer 31. A through hole 22a passes through the center of the rotating center shaft with yoke 22. The yoke 27 is fastened to the center shaft 22 by a pan head screw 34. A magnet 28 is fastened to said yoke 27. The yoke 27 is provided with a through hole 27a at the center, which connects to through hole 22a. The optical mixing plate 29 is mounted on the outlet of through hole 27a and fixed by a suitable means (adhesion, etc.). A case 30, fastened to the outer tube 21, is mounted on the outside of the optical mixing plate 29. In the above structure, the rotating center shaft with yoke 22 rotates together with the integrally mounted spring washer 31 and fixation ring with lid 23. It is also possible to use other support means replacing spring washer 31 and fixation ring with lid 23 and to support only the rotating center shaft with yoke 22 on the angular bearings and rotate it.

Coil support plate 25 is fastened to the outer tube 21 by machine screw 33. Coil 26, set on the coil support plate 25, connects to a power supply (not shown) via a cable. Coil 26, yoke 27, and magnet 28 comprise the conventionally known flat coreless electric motor.

With the optical mixer of this invention constructed as above, when coil 26 is energized, magnet 28 and yoke 27 rotate, and the optical mixing plate 29 also rotates. It is possible, as in the first embodiment of this invention, to make the laser beam passing through optical mixing plate 29 virtually incoherent. Since the operating principle of the electric motor is identical to that of a conventionally known flat coreless motor, a detailed explanation is omitted here.

The third embodiment of this invention is described below.

The third embodiment of this invention features an anti-vibration means.

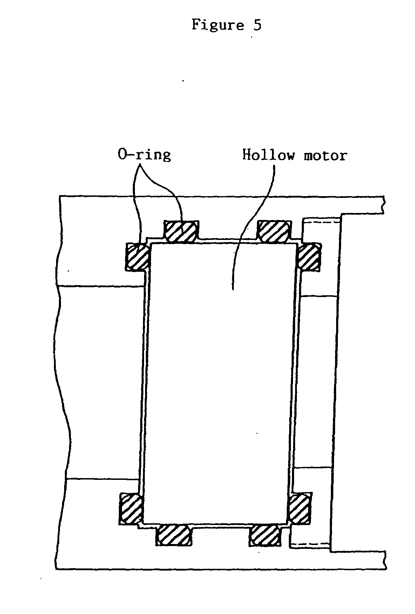

Figure 5 shows a section of the embodiment of this invention in which the hollow motor is supported by O-rings as cushions. The optical mixer is supported on the housing via the O-rings placed along the periphery and on both the right and left sides of said optical mixer. Vibration transferred to the housing is absorbed by the O-rings. The rotor is symmetrically structured in terms of both mass and shape which prevents vibrations of 100 Hz and below that are harmful for microscope and measuring equipment. The remaining high harmonic vibrations can easily be prevented by installing O-rings or other cushions in the housing.

Some specific structures of the optical mixer of this invention have been introduced. The use the optical mixer of this invention is described below. The drawings referred to in the description below show only the relationship between the optical mixing plate and laser beams.

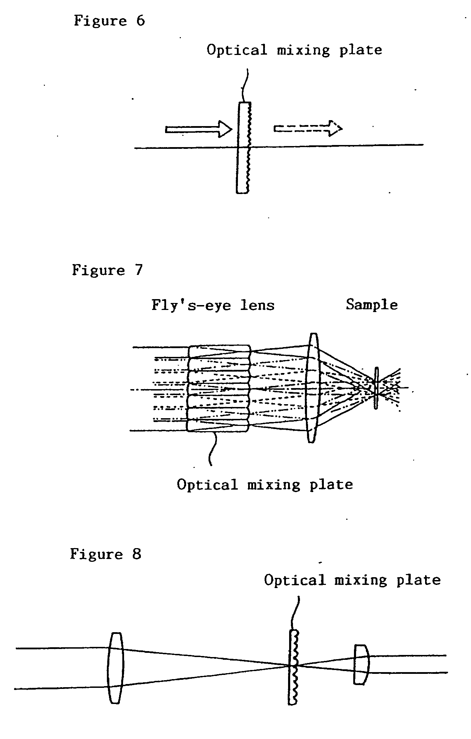

Figure 6 shows an example of typical applications in which laser beams enter the optical mixing plate that is parallel to the beams and no condenser lens is used after said plate.

Figure 7 shows an example of applications in which parallel laser beams enter the optical mixing plate. The secondary light source image created by a periodic structure is converted into a parallel light flux by means of a condenser lens.

Figure 8 shows laser beams that are focused on the optical mixing plate and then used as parallel light flux by lenses or other means. (This also applies to the optical mixing plate that is installed in the reverse beam expander.)

Lemon skin filters and beam-forming diffusers can be used as random nonperiodic structures in any of methods shown in Figures 6, 7 and 8.

The methods shown in Figures 7 and 8 are recommended for use when a periodic structural holographic plate (diffraction pattern generator), fly-eye lens, and micro-lens array are included.

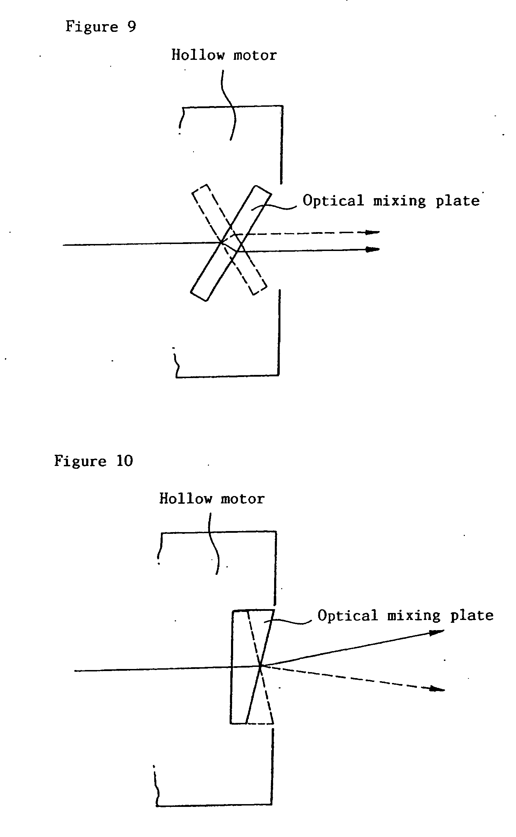

Figure 9 is an example of applications of the optical mixing plate of this invention in which a tilted flat parallel plate is used in place of the optical mixing plate.

To create this condition, laser beams are aimed at the rotating center shaft and refracted on the flat parallel plate, and an orbicular light is generated as the hollow motor rotates. The radius of the annulus light depends on the angle of tilt and the thickness of the flat parallel plate.

This annulus illumination introduces laser beams to the margins of the objective lens of a microscope and generates fluorescence through total internal reflection (at the interface between glass and solution) (excitation of evanescent waves). Figure 10 shows another example of an application of the optical mixing plate of this invention in which a wedge prism is used in place of the optical mixing plate.

To create this condition, laser beams are incident at the rotating center shaft and refracted on a wedge prism, and an orbicular light with an angle of inclination of annulus light is generated as the hollow motor rotates. The angle of inclination of annulus light depends on the vertical angle of the wedge prism.

As described above, the orbicular light can be mixed using the hollow motor. It is also possible to design the unit compactly and make it symmetrical about the rotating center shaft in terms of both shape and mass, which serves to reduce vibrations significantly.

Implementation of the optical mixer with a hollow motor of this invention has been described. Other means of driving the hollow motor may be used including, for example, a gear drive. The optical mixing plate and the method of using it are not limited to what is described above but various other utilization methods can be adopted.

This invention may be implemented in various other forms of embodiment without deviating from the spirit of its main features. The above-mentioned embodiments are therefore only a few examples and should not be construed as limiting.

### Industrial Applicability

This invention enables the construction of a compact optical mixer. It is therefore easy to incorporate it in optical equipment or install it as an external unit on existing equipment. It is also easy to make the laser beam virtually incoherent at frequencies lower than at least 3.3 kHz. In this state, speckle patterns, which cause problems in a wide range of applications, are completely removed from ordinary detectors. It is also easy to realize virtual incoherence at frequencies lower than 30 kHz assuming minor changes in the setting conditions.

It is possible to use laser beams extensively as bright light sources that feature the exceedingly monochromatic output of the laser. The industrial merits and applicable fields are infinite.

The motor load is low, and a super high-speed, low vibration optical mixer is realized because the use of a hollow motor allows the use of a compact circular optical mixing plate.

By using a hollow motor, not limited to an air motor or flat electric motor, the compact optical mixing plate can be installed as close as possible to the end face on the laser emitting side. In addition, a thin optical mixer has been designed. Because of these structural features, the light spread from optical mixing plate, not limited to laser beams, is collected effectively by lenses, making it possible to enlarge and homogenize the light source image and otherwise expand the fields of practical application.

Since this is a compact optical mixer with the drive motor designed symmetrically in terms of both mass and shape to reduce vibrations, and with the remaining high harmonic vibrations absorbed by O-rings and other cushions installed in the housing, the optical mixer of this invention is easily built into optical equipment or can be externally attached.

By incorporating a tilted flat parallel plate or a wedge prism in place of the mixing plate, annulus illumination from parallel annulus light or annulus light with an angle of inclination can be formed within a lighting system such as microscope or exposure device, with the unnecessary interference fringes removed. These are some of the excellent effects of this invention.

## Claims

1. An optical mixer comprising an optical mixing plate installed on the light path and a hollow motor that rotates said optical mixing plate at the peripheral speed of at least 1800 times per minute relative to the laser beam diameter, in which laser beams that are incident on said optical mixing plate are converted into virtually incoherent light.

2. An optical mixer as described in Claim 1 in which said hollow motor is an air motor.

3. An optical mixer as described in Claim 1 in which said hollow motor is an electric motor.

4. An optical mixer as described in any of Claims 1 through 3 in which said optical mixing plate includes both nonperiodic random structures such as a lemon skin filter or beam-forming diffuser and periodic structures such as a holographic plate (diffraction pattern generator), fly's-eye lens, and micro-lens array.

5. An optical mixer as described in any of Claims 1 through 3 in which annulus illumination is achieved by installing a tilted flat parallel glass disc or wedge prism disc glass on the center shaft of said hollow motor with the unnecessary interference fringes removed by high-speed rotation.

6. An optical mixer as described in any of Claims 1 through 5 in which said optical mixing plate is installed as close as possible to the end face on the laser emitting side and is designed as thin as possible.

7. An optical mixer as described in any of Claims 1 through 6 in which the rotor of said hollow motor is designed symmetrically in terms of both mass and shape.

8. An optical mixer as described in any of Claims 1 through 7 in which the high-speed hollow motor is supported on the housing via cushions.
